# EUROPEAN PATENT APPLICATION

(11) **EP 3 629 627 A1**
(43) Date of publication of application: **01.04.2020**
(21) Application number: 18197029.4
(22) Date of filing: 27.09.2018
(51) Int. Cl.: H04W 40/02, H04B 7/185

(54) **ROUTING METHOD FOR SATELLITE CONSTELLATIONS BASED ON HOP-BY-HOP AUTONOMOUS DECISIONS AND MINIMIZING THE USE OF INTER-PLANE LINKS**

(71) Applicant: GomSpace A/S, 9220 Aalborg Ø (DK)
(72) Inventor: Soret Álvarez, Beatriz, 9000 Aalborg (DK); Ghizoni, Leonardo, 9000 Aalborg (DK)
(74) Representative: Larsen & Birkeholm A/S

(57) **Abstract**

The present invention relates to a method for hop-by-hop routing of data packets in satellite constellations that minimizes the use of inter-plane links.

## Description

### Technical field of the invention

The present invention relates to routing of data packets in satellite constellations.

### Background of the invention

One of the challenges of satellite networks is the development of efficient routing algorithms to compute the paths connecting any pair of nodes in the network. In a satellite network, the algorithms should adapt to the dynamic satellite network topology in real time, and with minimum communication and computational overhead.

The classical approach to routing is to centrally compute all the paths in a ground station. Satellites forward the packets according to the on-board routing tables, which are configured based on the ground computations. This centralized approach has the potential to find the optimal solution to the routing problem. However, its application in satellite networks could be challenging. The routing tables must be frequently updated and sent to the satellites to follow the network topology changes due to the satellite movement. For this, the Ground-to-Satellite Link (GSL) is used, but its intermittent availability can be insufficient to track the topology changes. Moreover, the centralized, optimal approach might suffer from scalability problems in dense constellations. For instance, Dijkstra's shortest path algorithm has a computational complexity O(K²).

It is therefore desirable to provide a solution, which can overcome some of these issues.

### Summary of the invention

A first aspect of the present invention relates to a hop-by-hop method for routing a data packet through a plurality of satellite nodes in a satellite constellation and towards a preset destination, the method comprising the steps of:
- providing each satellite node in a satellite constellation with the geometry and dynamics of said satellite constellation; and
- configuring each satellite node in said satellite constellation to autonomously determine, according to a preset set of rules, the best available link for forwarding a received data packet to a neighboring satellite node, and wherein said preset set of rules comprises the rule of minimizing the use of inter-plane links.

A second aspect relates to a satellite adapted for:
- receiving a data packet with the geometry and dynamics of the satellite constellation in which it is positioned; and
- autonomously determining, according to a preset set of rules, the best available link for forwarding a received data packet to a neighboring satellite node, and wherein said preset set of rules comprises the rule of minimizing the use of inter-plane links.

The inventors of the present invention have provided a hop-by-hop autonomous routing method for satellite nodes in a satellite constellation. This invention discloses a simple and efficient solution for autonomous routing, with the aim of minimizing the use of inter-plane links. The principle is choosing the best next-hop for each satellite node from the list of available links, and with the aim of routing the data packet in the right direction towards the destination. There is a two-fold motivation for this solution. Firstly, the resilience of the satellite network is increased with satellites nodes that run the routing algorithm independently of the rest of the satellite nodes in the network (on-board routing). Secondly, the predictability of an orbit topology is utilized, where the satellite nodes do not move randomly, but according to well-known physical laws. This predictability makes it feasible to find the path without utilizing broadcasting ping messages to discover adjacent satellite nodes, thereby minimizing the overheads. Taking local decisions at each satellite node facilitates the management of congestion and failures in the satellite network.

A generic dense constellation of satellites providing global or partial coverage consists of many satellite nodes organized in several orbital planes. The planes can be deployed at different inclinations and heights. The present invention uses a simple routing algorithm with no constraints to the constellation geometry. No routing tables are maintained, and there is thus no need for the ground segment to send updated information. Instead of calculating the whole path to the destination, only the next-hop is obtained, by simply trying to reduce path costs by choosing the best available link for forwarding a received data packet to a neighboring satellite node, and towards the destination. The end-to-end routing from origin to destination is the result of the satellite network collective behavior. The algorithm minimizes the number of required inter-plane hops, which are typically more expensive for the satellite network, and relies mostly on intra-plane hops. The algorithm can be used as a backup method when the primary algorithm maintained on ground is not available due to e.g., network failures.

Within an orbital plane, the satellite nodes are normally evenly spaced. The orbital planes can be deployed at different inclinations and heights. Orbits with a low inclination are called equatorial orbits or near equatorial orbits, and orbits passing above or nearly above both poles on each revolution (i.e., inclinations close to 90 degrees) are referred to as polar orbits. This invention addresses generic constellations, where the orbits can have any inclination, such as, polar orbits only, equatorial orbits only, or combinations of equatorial orbits, polar orbits and/or any other inclination in the planes. The satellite nodes are connected to ground stations through the Ground-to-Satellite Link (GSL), which is used for Telemetry, Telecommand (TMTC) data, and possibly satellite payload data. The GSL is available for a short time each orbital cycle. The satellites are connected to each other via the Inter-Satellite Links (ISL). The ISL can be intra-plane ISL, connecting with the satellite node in front and the satellite node behind in the same plane; and inter-plane ISL, connecting satellite nodes from different orbital planes. In the same plane, inter-satellite distances are preserved along time. Between different high inclination orbital planes, the inter-satellite distances are time-variant: longest when satellite nodes are over Equator, and shortest when they are over the polar region boundaries. Furthermore, the orbital periods are different when the orbital planes are deployed at different heights. Therefore, intra-plane ISL are typically easier to perform than inter-plane ISL.

The method of the present invention provides routing for satellite constellations, which does not require routing tables, and with no constraints to the satellite network geometry. The routing decisions are met on a per-packet basis, i.e., each satellite node processes every incoming data packet independently. When a given satellite node receives a data packet with a specific destination, the satellite node autonomously calculates the next hop by calculating the best orbital plane, without calculating the whole path to the destination. The main purpose is to get the data packet towards the destination trying to reduce path costs and at the same time to minimize the use of inter-plane ISL.
Each satellite node is provided with knowledge of the geometry and the dynamics of the satellite network, and thereby to the set of available links at any time. If some links are not working, the satellite network is assumed to broadcast this information to all nodes in the constellation, thereby avoiding non-functional links.
The topology information is captured in the form of satellite node ID and position, with known relative or absolute coordinates. The constellation consists of N satellite nodes in O orbital planes. There is a surjective correspondence between satellite nodes and orbital planes, with a large number of satellite nodes per orbital plane. Given the satellite node ID, it is trivial to get the orbital plane ID. The distance between any pair of nodes is computed using the relative or absolute coordinates.
Each satellite node keeps the updated set of available links L=[I1, ... In], and thereby available satellite nodes, at any time. The decision of whether a satellite node is reachable or not can be based on purely physical distance or include more sophisticated link budget considerations that can relate the size of the packet to be forwarded with the link budget, to exclude links with too little capacity. From L, it is trivial to get the set of available orbital planes P. Instead of treating each satellite node individually, the algorithm looks for the best orbital plane, i.e., the one that gets the data packet closer to its destination. This principle minimizes the number of required inter-plane ISL hops, as the cost of using these links typically exceeds the cost of using in-plane links - or they are intermittent unlike the in-plane links to neighboring nodes, which are available most of the time with a more or less stable cost. The orbital plane with the destination therein is reached as soon as possible, and from that moment, the algorithm relies uniquely on intra-plane ISL.

The algorithm may comprise the following three steps S1-S3:
- S1: Get next data packet to be forwarded, with destination D;
- S2: From the set of available links S, choose the best available link, I_{i*}, using a preset set of rules; and
- S3: Forward the data packet through I_{i*}.

In one or more embodiments, each satellite node is configured to forward a received data packet to a neighboring satellite node with an available link thereto, and at the same time being in a position closer to said preset destination. The distances may be calculated in diverse ways, such as a) cartesian distances; and b) normalized distances that can capture e.g. the directionality of the antennas to capture information of the link budget.

In one or more embodiments, the availability of a link is determined and prioritized in accordance with path costs and/or quality of service costs.

In one or more embodiments, the path costs are determined and prioritized from the group consisting of: the cost of the link, the capacity, the link budget, physical distance, antenna pattern, nominal bandwidth on the link, normalized distance taking the antenna pattern of transmitting and receiving systems into account, and combinations thereof.

In one or more embodiments, the quality of service costs are determined from the group consisting of: throughput, error rates, reliability, bit error rates, packet error rates, transmission delay/latency/jitter, the available bandwidth, the used bandwidth, and combinations thereof. The quality of service can be information inserted in the header of the data packet or deducted from the header of the data packet.

In one or more embodiments, the rule of minimizing the use of inter-plane links comprises the sub rule of:
a) if the destination is on ground and is within the field of view of the satellite node having received the data packet, then download said data packet using a Ground-to-Satellite Link.

In one or more embodiments, the rule of minimizing the use of inter-plane links comprises the sub rule of:
a) if the destination is on ground, and if the satellite node having received the data packet has an available Ground-to-Satellite Link to said destination, then download said data packet using said Ground-to-Satellite Link.

In one or more embodiments, the rule of minimizing the use of inter-plane links comprises the sub rule of:
b) if the destination is within the same orbital plane as the satellite node having received the data packet, then forward said data packet to the available satellite node within said orbital plane with the shortest distance to the destination.

In one or more embodiments, the rule of minimizing the use of inter-plane links comprises the sub rule of:
c1) if the destination is within an orbital plane different from the satellite node having received the data packet, and there are satellite nodes in said orbital plane with an available link, then forward said data packet to the available satellite node; with the proviso that if there are several available satellite nodes within said orbital plane, then choose the one whose distance to the destination is the shortest.

In one or more embodiments, the rule of minimizing the use of inter-plane links comprises the sub rule of:
c2) if the destination is within an orbital plane different from the satellite node having received the data packet, and there are satellite nodes in said orbital plane with an available link, then forward said data packet to the available satellite node; with the proviso that if there are several available satellite nodes within said orbital plane, then choose the one whose distance to the destination is the shortest; with the proviso that if a satellite node in the same orbital plane as the satellite node having received the data packet has an available link to the orbital plane with the destination that is shorter than the available link(s) of the satellite node having received the data packet, then forward said data packet to said satellite node.

In one or more embodiments, the rule of minimizing the use of inter-plane links comprises the sub rule of:
d1) if the destination is within an orbital plane different from the satellite node having received the data packet, and different from the orbital planes with reachable satellite nodes, then forward the data packet to the available satellite node whose distance to the destination is the shortest.

In one or more embodiments, the rule of minimizing the use of inter-plane links comprises the sub rule of:
d2) if the destination is within an orbital plane different from the satellite node having received the data packet, and different from the orbital planes with reachable satellite nodes, then forward the data packet to the available satellite node whose distance to the destination is the shortest; with the proviso that if a satellite node in the same orbital plane as the satellite node having received the data packet has an available link directly to the orbital plane with the destination, then forward said data packet to said satellite node.

The routing method according to the present invention may be a software program running in each satellite, in the network layer of the protocol stack (e.g., IP layer if it is a TPC/IP network). An advantage of the proposed routing method is its simplicity and its scalability. The algorithm relies on topology awareness in each satellite. The satellite does not require any other extra information to take an independent decision of where to forward a received data packet.

In one or more embodiments, the satellite constellation is a dense LEO satellite constellation combined with a) other dense satellite networks, like MEO or GEO networks, and/or b) LEO, MEO and GEO satellites, or combinations thereof, and/or c) terrestrial supporting networks, and/or d) any other network with a dynamic topology.

In one or more embodiments, the satellite constellation is a LEO satellite constellation combined with a) other dense satellite networks, like MEO or GEO networks, and/or b) LEO, MEO and GEO satellites, or combinations thereof, and/or c) terrestrial supporting networks, and/or d) any other network with a dynamic topology.

In one or more embodiments, the satellite constellation may be combined with a) satellite networks, like MEO or GEO networks, and/or b) LEO, MEO and GEO satellites, or combinations thereof, and/or c) terrestrial supporting networks, and/or d) any other network with a dynamic topology.

Another aspect relates to a satellite adapted for:
- receiving a data packet with the geometry and dynamics of the satellite constellation in which it is positioned; and
- autonomously determining, according to a preset set of rules, the best available link for forwarding a received data packet to a neighboring satellite node in a position closer to a preset destination, and wherein said preset set of rules comprises the rule of minimizing the use of inter-plane links.

Yet another aspect relates to a satellite adapted for:
- receiving a data packet with the geometry and dynamics of the satellite constellation in which it is positioned;
- autonomously extracting information about quality of service from the header of the data packet; and
- autonomously determining, according to a preset set of rules, the best available link for forwarding a received data packet to a neighboring satellite node in a position closer to a preset destination, and wherein said preset set of rules comprises the rule of minimizing the use of inter-plane links.

In one or more embodiments, the satellite is further adapted to keep an updated list of available links grouped in links to ground, links to other satellite nodes in the same orbital plane, and links to satellite nodes in other orbital planes; and wherein the availability of a link is determined and prioritized in accordance with path costs and/or quality of service costs. The quality of service can be information inserted in the header of the data packet or deducted from the header of the data packet. Hence, the satellite is configured to extract and use such data.

In one or more embodiments, the rule of minimizing the use of inter-plane links comprises one or more of the sub rules according to the present invention.

In one or more embodiments, the preset set of rules comprises rules prioritizing available links in accordance with quality-of-service parameters, and/or performance parameters, such as the cost of the link, the capacity, the link budget, physical distance, antenna pattern, nominal bandwidth on the link, the available bandwidth, the used bandwidth, normalized distance taking the antenna pattern of transmitting and receiving systems into account, the transmission latency of a function of the former mentioned quantities, or combinations thereof.

In one or more embodiments, the satellite is a LEO satellite.

Yet another aspect relates to the use of the method according to the present invention as a backup solution for cases in which the link to ground is not working or is congested, or the routing tables or other information required for the primary routing algorithm is not available, or for any other abnormal situation in the network.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 shows the main differences between traditional centralized routing and a hop-by-hop routing approach in accordance with various embodiments of the invention;
Figure 2 shows four situations, where inter-plane links are minimized by different sub rules in accordance with various embodiments of the invention;
Figure 3 shows a situation, where inter-plane links are minimized by a sub rule in accordance with various embodiments of the invention; and
Figure 4 shows a situation, where inter-plane links are minimized by a sub rule in accordance with various embodiments of the invention.

### Detailed description of the invention

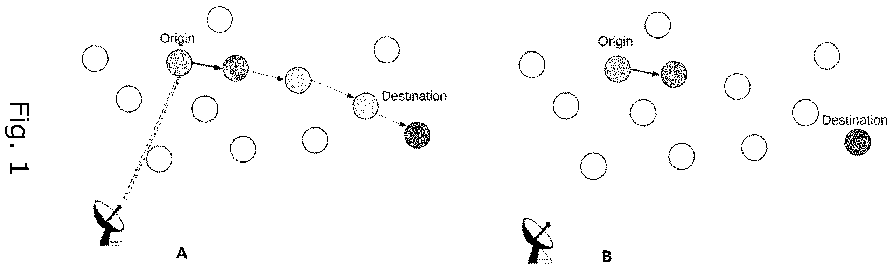

Figure 1 shows the main differences between traditional centralized routing (A) and a hop-by-hop routing (B) approach in accordance with various embodiments of the invention. In the traditional centralized routing approach (A), the network shall implement the optimal solution to the path problem when possible, and such solution must be computed on ground, using all collected information from the space and ground segments. A problem arises when the network needs maintenance or service, e.g. in case of failure or congestion. In such a situation, the hop-by-hop routing approach (B) in accordance with the present invention, allows for the possibility of running sub-optimal, autonomous solutions. The present invention discloses a simple, and efficient solution for autonomous routing, with the aim of minimizing the use of inter-orbital plane links.

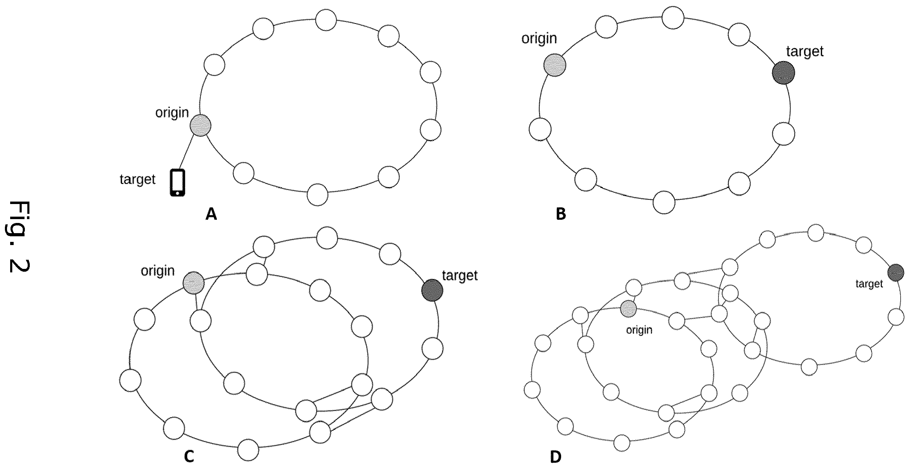

Figure 2 shows four situations, where inter-plane links are minimized by different steps in accordance with various embodiments of the invention.

In Figure 2A the destination is on ground (smartphone) and within the field of view of the satellite node (Origin) having received the data packet. The rule of minimizing the use of inter-plane links is met, as long as the Origin does not forward the packet to a satellite node in another orbital plane. Hence, the Origin may forward the data packet to either of the two closest satellite nodes in the orbital plane. In order to avoid circulation of the data packet within the orbital plane without reaching the ground destination, the rule of minimizing the use of inter-plane links comprises the sub rule of:
a) if the destination is within the field of view of the satellite node having received the data packet, then download said data packet using a Ground-to-Satellite Link. The data packet is therefore shown downloaded using a Ground-to-Satellite Link.

In Figure 2B, the destination (another satellite node, perhaps the satellite node being in communication with a ground station or destination at a given time) is within the same orbital plane as the satellite node (Origin) having received the data packet. The rule of minimizing the use of inter-plane links is met, as long as the Origin does not forward the packet to a satellite node in another orbital plane. Hence, the Origin may forward the data packet to either of the two closest satellite nodes in the orbital plane. In order to minimize the number of links towards the destination, the rule of minimizing the use of inter-plane links comprises the sub rule of:
b) if the destination is within the same orbital plane as the satellite node having received the data packet, then forward said data packet to the available satellite node within said orbital plane with the shortest distance to the destination. The data packet is therefore forwarded to the available satellite node within said orbital plane with the shortest distance to the destination.

In Figure 2C, the destination is within an orbital plane different from the satellite node (Origin) having received the data packet. In this situation, a sub-rule is needed for the Origin to forward the data packet in the right direction. Thus, the rule of minimizing the use of inter-plane links comprises the sub rule of:
c1) if the destination is within an orbital plane different from the satellite node having received the data packet, and there are satellite nodes in said orbital plane with an available link, then forward said data packet to the available satellite node; with the proviso that if there are several available satellite nodes within said orbital plane, then choose the one whose distance to the destination is the shortest. As the Origin in this situation only has one available link to a satellite node in the other orbital plane, it is obvious that the data packet is forwarded to this satellite node.

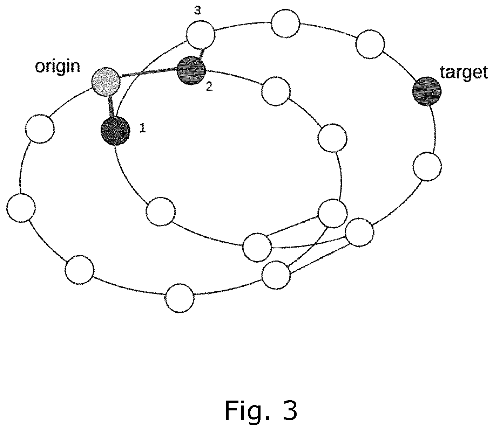

In order to minimize the number of links towards the destination, the rule of minimizing the use of inter-plane links may alternatively comprise the sub rule of:
c2) if the destination is within an orbital plane different from the satellite node having received the data packet, and there are satellite nodes in said orbital plane with an available link, then forward said data packet to the available satellite node; with the proviso that if there are several available satellite nodes within said orbital plane, then choose the one whose distance to the destination is the shortest; with the proviso that if a satellite node in the same orbital plane as the satellite node having received the data packet has an available link to the orbital plane with the destination that is shorter than the available link(s) of the satellite node having received the data packet, then forward said data packet to said satellite node. The differences between these two sub rules may be seen in Figure 3, where Origin forwards the data packet to satellite node 1 in accordance with sub rule c1, but to satellite node 2 in accordance with sub rule c2, as the link between satellite node 2 and satellite node 3 is shorter than the link between Origin and satellite node 1.

In Figure 2D, the destination is within an orbital plane different from the satellite node (Origin) having received the data packet, and different from the orbital planes with reachable satellite nodes. In this situation, a sub-rule is needed for the Origin to forward the data packet in the right direction. Thus, the rule of minimizing the use of inter-plane links comprises the sub rule of:
d1) if the destination is within an orbital plane different from the satellite node having received the data packet, and different from the orbital planes with reachable satellite nodes, then forward the data packet to the available satellite node whose distance to the destination is the shortest. In the situation depicted in Figure 2D, the Origin would forward the data packet to the satellite node in the orbital plane whose distance to the destination is the shortest, thereby ignoring the possibility of using its inter-plane link.

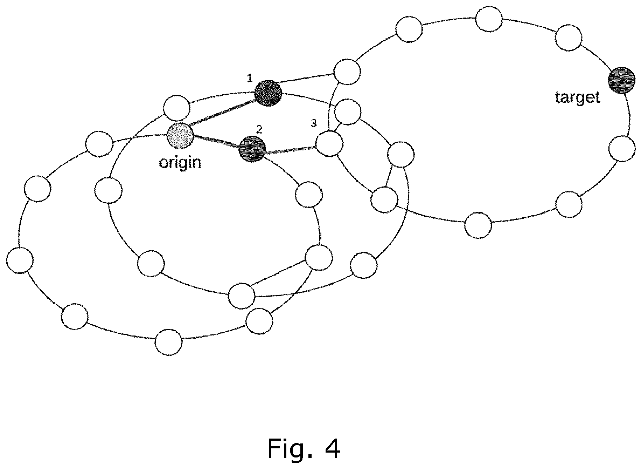

A different situation is shown in Figure 4, where the Origin has an inter-plane link to satellite node 1 that is closer to the destination than the link to the closest satellite node in the orbital plane (satellite node 2). According to sub rule d1, it would have to forward the data packet satellite node 1 rather than to satellite node 2. This would result in a situation, where the final path would have used one more inter-plane link than if the data packet was forwarded to satellite node 2 that has a direct inter-plane link available to the orbital planes with the destination. Hence, in order to minimize the number of inter-plane links towards the destination, the rule of minimizing the use of inter-plane links may alternatively comprise the sub rule of:
d2) if the destination is within an orbital plane different from the satellite node having received the data packet, and different from the orbital planes with reachable satellite nodes, then forward the data packet to the available satellite node whose distance to the destination is the shortest; with the proviso that if a satellite node in the same orbital plane as the satellite node having received the data packet has an available link directly to the orbital plane with the destination, then forward said data packet to said satellite node.

## Claims

1. A hop-by-hop method for routing a data packet through a plurality of satellite nodes in a satellite constellation and towards a preset destination, the method comprising the steps of:
- providing each satellite node in a satellite constellation with the geometry and dynamics of said satellite constellation;
- configuring each satellite node in said satellite constellation to autonomously determine, according to a preset set of rules, the best available link for forwarding a received data packet to a neighboring satellite node, and wherein said preset set of rules comprises the rule of minimizing the use of inter-plane links.

2. A method according to claim 1, wherein the availability of a link is determined and prioritized in accordance with path costs and/or quality of service costs.

3. A method according to claim 2, wherein the path costs are determined and prioritized from the group consisting of: the cost of the link, the capacity, the link budget, physical distance, antenna pattern, nominal bandwidth on the link, normalized distance taking the antenna pattern of transmitting and receiving systems into account, and combinations thereof.

4. A method according to any one of the claims 2-3, wherein the quality of service costs are determined from the group consisting of: throughput, error rates, reliability, bit error rates, packet error rates, transmission delay/latency/jitter, the available bandwidth, the used bandwidth, and combinations thereof.

5. A method according to any one of the claims 1-4, wherein each satellite node is configured to forward a received data packet to a neighboring satellite node with an available link thereto, and at the same time being in a position closer to said preset destination.

6. A method according to any one of the claims 1-5, wherein the rule of minimizing the use of inter-plane links comprises the sub rule of:
a) if the destination is on ground, and if the satellite node having received the data packet has an available Ground-to-Satellite Link to said destination, then download said data packet using said Ground-to-Satellite Link.

7. A method according to any one of the claims 1-6, wherein the rule of minimizing the use of inter-plane links comprises the sub rule of:
b) if the destination is within the same orbital plane as the satellite node having received the data packet, then forward said data packet to the available satellite node within said orbital plane with the shortest distance to the destination.

8. A method according to any one of the claims 1-7, wherein the rule of minimizing the use of inter-plane links comprises the sub rule of:
c1) if the destination is within an orbital plane different from the satellite node having received the data packet, and there are satellite nodes in said orbital plane with an available link, then forward said data packet to the available satellite node; with the proviso that if there are several available satellite nodes within said orbital plane, then choose the one whose distance to the destination is the shortest.

9. A method according to any one of the claims 1-7, wherein the rule of minimizing the use of inter-plane links comprises the sub rule of:
c2) if the destination is within an orbital plane different from the satellite node having received the data packet, and there are satellite nodes in said orbital plane with an available link, then forward said data packet to the available satellite node; with the proviso that if there are several available satellite nodes within said orbital plane, then choose the one whose distance to the destination is the shortest; with the proviso that if a satellite node in the same orbital plane as the satellite node having received the data packet has an available link to the orbital plane with the destination that is shorter than the available link(s) of the satellite node having received the data packet, then forward said data packet to said satellite node.

10. A method according to any one of the claims 1-9, wherein the rule of minimizing the use of inter-plane links comprises the sub rule of:
d1) if the destination is within an orbital plane different from the satellite node having received the data packet, and different from the orbital planes with reachable satellite nodes, then forward the data packet to the available satellite node whose distance to the destination is the shortest.

11. A method according to any one of the claims 1-9, wherein the rule of minimizing the use of inter-plane links comprises the sub rule of:
d2) if the destination is within an orbital plane different from the satellite node having received the data packet, and different from the orbital planes with reachable satellite nodes, then forward the data packet to the available satellite node whose distance to the destination is the shortest; with the proviso that if a satellite node in the same orbital plane as the satellite node having received the data packet has an available link directly to the orbital plane with the destination, then forward said data packet to said satellite node.

12. A satellite adapted for:
- receiving a data packet with the geometry and dynamics of the satellite constellation in which it is positioned; and
- autonomously determining, according to a preset set of rules, the best available link for forwarding a received data packet to a neighboring satellite node, and wherein said preset set of rules comprises the rule of minimizing the use of inter-plane links.

13. A satellite according to claim 12, further adapted to determine the availability of a link in accordance with path costs and/or quality of service costs.

14. A satellite according to any one of the claims 12-13, wherein the rule of minimizing the use of inter-plane links comprises one or more of the sub rules according to any one of the claims 6-11.

15. Use of the method according to any one of the claims 1-11 as a backup solution for cases in which the link to ground is not working, is congested, the routing tables or other information required for the primary routing algorithm is not available, or for any other abnormal situation in the network.
